**Europäisches Patentamt**

(19) **European Patent Office**

**Office européen des brevets**

(11) Veröffentlichungsnummer: **0 107 133**
**B1**

(12) # EUROPÄISCHE PATENTSCHRIFT

(45) Veröffentlichungstag der Patentschrift:
21.05.86

(51) Int. Cl.⁴: **H 04 M 19/08**

(21) Anmeldenummer: **83110059.9**

(22) Anmeldetag: **08.10.83**

(54) Schaltungsanordnung zum Speisen einer eine konstante Betriebsspannung liefernden Stromversorgungseinrichtung.

(30) Priorität: **16.10.82 DE 3238416**

(43) Veröffentlichungstag der Anmeldung:
**02.05.84 Patentblatt 84/18**

(45) Bekanntmachung des Hinweises auf die Patenterteilung:
**21.05.86 Patentblatt 86/21**

(84) Benannte Vertragsstaaten:
**AT BE CH DE FR GB IT LI LU NL**

(56) Entgegenhaltungen:
**EP - A - 0 023 714**
**DE - A - 3 029 895**
**GB - A - 2 052 213**

(73) Patentinhaber: **Licentia Patent-Verwaltungs-GmbH,**
**Theodor-Stern-Kai 1, D-6000 Frankfurt/Main 70 (DE)**

(72) Erfinder: **Eberhardt, Kurt, Dipl.-Ing., Elbenweg 26,**
**D-7900 Ulm (DE)**

(74) Vertreter: **Schulze, Harald Rudolf, Dipl.-Ing. et al,**
**Licentia Patent-Verwaltungs-GmbH**
**Theodor-Stern-Kai 1, D-6000 Frankfurt/Main 70 (DE)**

EP 0 107 133 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Schaltungsanordnung zum Speisen einer eine kostante Betriebsspannung liefernden Stromversorgungseinrichtung der im Obergriff des Anspruchs 1 genannten Art.

Eine solche Schaltungsanordnung ist aus der DE-C-29 31 922 bekannt

Bei dieser ist die Basis des emitterseitiges Transistors der Darlington-Schaltung an einen an beiden Anschlußklemmen der Anschlußleitung geschalteten Basisspannungsteiler angeschlossen. Ein im Belastungsstromkreis liegender Transistor wird von einer aus zwei Transistoren bestehenden Diskriminatorschaltung gesteuert, die die Spannung am Basisspannungsteiler und die der Basis des kollektorseitigen Transistors der Darlington-Schaltung überwacht. Die bekannte Schaltung hat jedoch den Nachteil, daß bei ihrer Integration auf einem Halbleiterchip die Schaltungsanordnung im Gebiet der Stromübernahme - vom Speisen der Stromversorgungseinrichtung zum die Stromversorgungseinrichtung umgehenden Belastungsstromkreis - elektrische HF-Schwingungen auftreten, die nur durch weitere externe, nicht auf dem Baustein integrierbare Bauteile beseitigt werden können. Außerdem besteht der Wunsch, die minimal zulässige Spannung für die Anschlußleitungsklemmen weiter zu reduzieren.

Eine Verbesserung dieser Schaltungsanordnung ist durch die DE-DS 30 29 895 bekannt geworden. Bei dieser Schaltungsanordnung vergleicht ein Differenzverstärker eine konstante Spannung mit der Spannung an einem mit Emitterwiderstand 14 bezeichnenden Widerstand, dessen anderes Ende an der einen Anschlußklemme Kl angeschlossen ist. Das in Abhängigkeit von ger Größe der Eingangsspannung wirksam werdende Schaltmittel ist ein als Doppelkollektor-Transistor ausgebildeter Transistor des Differenzverstärkers, dessen zweiter Kollektor den im Belastungsstromkreis liegenden Transistor steuert.

Wenn die Schaltungsanordnung (Speiseschaltung) parallel zu einer bereits existierenden Teilnahmarstation geschaltet werden soll, die bereits einan Innenwiderstand von 1, 2 kΩ aufweist, darf gemäß den postalischen Bestimmungen die Einfügungsdämpfung durch zusätzliche Schaltungseinrichtungen maximal 0,5 dB betragen. Dies bedeutet, daß der Wechselstromwiderstand der Speiseschaltung >25 kΩ sein muß. Mit der aus der DE-OS 30 29 895 bekannten Schaltung ist jedoch wegen des schlechten Stromverstärkungsfaktors des zweiten Kollektors des Doppalkollektor-Transistors zum Ausstcuern des im Delastungsstromkreis liegenden Transistors ein relativ hoher Strom für den Differenzverstärker erforderlich, so daß sich dadurch für dia Speiseschaltung ein Wechselstromwiderstand von lediglich maximal 3 kΩ erreichen läßt. Ferner tritt durch den geringen Stromverstärkungsfaktor des zweiten Kollektors des Doppelkollektortransistors eine Verzerrung der Signalspannung durch den unzureichend aussteuerbaren Transistor im Belastungsstromkreis auf.

Der Erfindung liegt die Aufgabe zugrunde, den Stand der Technik zu verbessern. Insbesondere soll der genannte Wechselstromwiderstand der Speiseschaltung >25 kΩ sein, wobei die maximal zulässige Spannung für die Anschlußklemmen moglichst niedrig sein soll. Verzerrungen des Signalstromes sollen auch bei Fließen des Speisestromes im Belastungsstromkreis vermieden werden.

Die Aufgabe wird durch die im kennzeichnenden Teil des Anspruchs 1 genannten Merkmale gelöst. Die erfindungsgemäße Schaltungsanordnung hat einen Wechselstromwiderstand, der über 45 kΩ liegt. Der zusätzliche Klirrfaktor im Stromübernahmegebiet liegt unter 1 ‰ und die maximal zulässige Signalwechselspannung bei einem minimalen Schleifenstrom (Gleichstrom der Anschlußleitung) von 5 mA liegt bei 5 $V_{SS}$.

Vorteilhafte Ausgestaltungen und Weiterbildungen der Erfindung sind in den Unteransprüchen angegeben. Bei Ausgestaltung des Differenzverstärkers nach Anspruch 1 kann dieser noch bei sehr niedrigen Anschlußklemmenspannungen verzerrungsfrei mit hoher Verstärkung arbeiten. Eine Konstantspannungsquelle gemäß Anspruch 3 ist leicht insbesondere in integrierter Halbleiter-Schaltungstechnik zu realisieren und in einfacher Weise auf den gewünschten Spannungswert auszulegen. Durch einen weiteren Transistor zwischen Differenzverstärker und Doppelkollektor-Transistor und damit der Darlington-Schaltung kann der Differenzverstärker mit sehr niedrigen Betriebsströmen, beispielsweise unter 0,5 mA, noch betriebssicher arbeiten. Seine Transistoren lassen sich infolge des niedrigen Stromes auf sehr kleiner Chipfläche aufbauen, so daß die erfindungsgemäße Schaltungsanordnung etwa 1/7 der Chipfläche der bekannten Schaltungsanordnung einnimmt. Durch die Weiterbildung der Erfindung gemäß Anspruch 5 ist der Wechselstromwiderstand der Schaltungsanordnung getrennt auf einen niedrigeren Wert einstellbar.

Die Erfindung wird nun anhand von Zeichnungen und einem Ausführungsbeispiel näher erläutert. Es zeigen im einzelnen:

FIG. 1 Prinzipschaltbild der Schaltungsanordnung gemäß der Erfindung;

FIG. 2 Schaltbild des Ausführungsbeispiels.

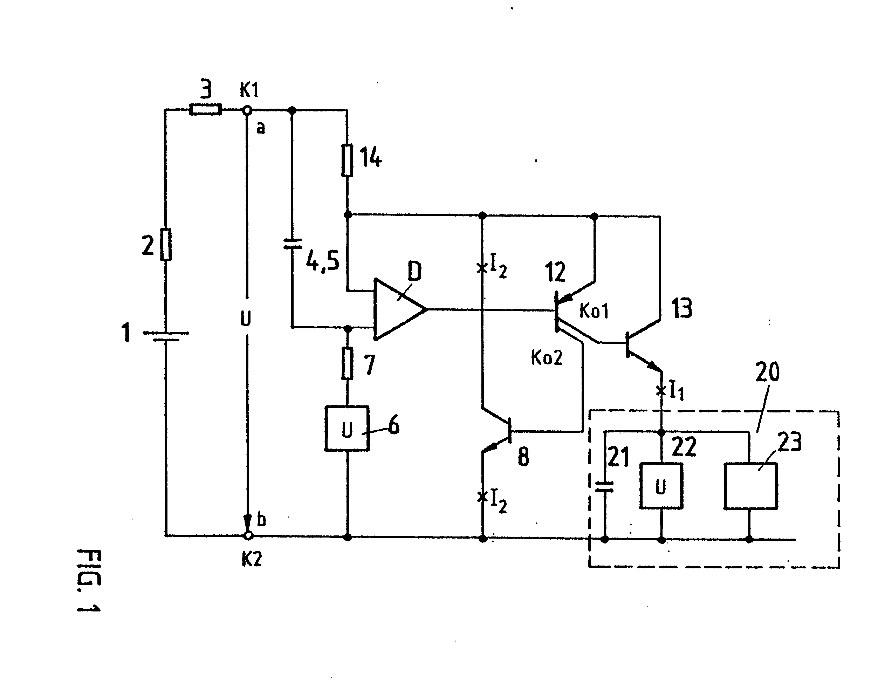

In FIG. 1 ist mit 1 die Speisespannung und mit 2 der Innenwiderstand der Teilnehmeranschlußschaltung und mit 3 die Impedanz der Teilnehmeranschlußleitung bezeichnet. K1 und K2 sind die Klemmen der Teilnehmerstation, von der hier lediglich die erfindungsgemäße Schaltungsanordnung dargestellt ist, die zum Speisen einer eine konstante Betriebsspannung liefernden Stromversorgungseinrichtung 20 dient. Die Stromversorgungseinrichtung 20 enthält eine Konstantspannungsquelle - im einfachsten Fall eine Zenerdiode -, einen Speicherkondensator 21, für den Fall, daß der Speisegleichstrom kurzzeitig unterbrochen sein kann und die an der Stromversorgungseinrichtung angeschlossenen Schaltungen, wie z.B. Wählzeichengeber, Auswerteschaltung oder Mehrfrequenztonsender und sonstige in der Teilnehmerstation erforderlichen elektronischen Steuerschaltungen. Die den Speisegleichstrom bestimmende Einrichtung ist als gegengekoppelte Verstärkerstufe mit den Bauelementen 12, 13 und 14 ausgebildet.

In Abhängigkeit von der Größe der Eingangsspannung an den Klemmen K1 und K2 sorgt ein Schaltmittel 12 dafür, daß zum Speisen der Stromversorgungseinrichtung 20 der Speisestromkreis $I_1$ durchgeschaltet wird und bei nichtausreichender Größe der Eingangsspannung der Speisestromkreis $I_1$ unterbrochen wird, wobei ein die Stromversorgungseinrichtung 20 umgehender Belastungsstromkreis $I_2$ über den Transistor 8 durchgeschaltet wird.

Die gegengekoppelte Verstärkerstufe besteht aus einer komplementären Darlington-Schaltung mit den Transistoren 12 und 13, deren emitterseitiger Transistor 12, im Ausführungsbeispiel vom pNP-Typ, über einen Emitterwiderstand 14 an die eine Anschlußklemme K1 der Anschlußleitung und deren kollektorseitiger Transistor 13 vom zweiten Leitfähigkeitstyp mit seinem Emitter mit der Stromversorgungseinrichtung 2D verbunden ist. Soweit ist diese Schaltung aus der DBp 29 31 922 bekannt.

Erfindungsgemäß ist nun der emitterseitige Transistor 12 der Darlington-Schaltung als Doppelkollektor-Transistor ausgebildet, dessen erster, normaler Kollektor Kol mit der Basis des kollektorseitigen Transistors 13 und dessen zweiter Kollektor Ko2 mit der Basis des im Belastungsstromkreis liegenden Transistors 8 vom NPN-Typ verbunden ist.

Wie ersichtlich, ist der im Belastungsstromkreis liegende Transistor 8 mit seinem Kollektor am Verbindungspunkt zwischen Emitterwiderstand 14 und Emitter des Doppelkollek- tor-Transistors 12 angeschlossen und sein Emitter ist mit der anderen Anschlußklemme K2 verbunden. Gesteuert vom zweiten Kollektor des Doppelkollektor-Transistors 12 wird durch den Transistor 8 der Belastungsstrom $I_2$ geschaltet.

Wird nun die Basis des Transistors 12 auf einem konstanten Potential gehalten, welches einige 100 mV höher liegt als die Spannung der Stromversorgungseinrichtung 20, so wird in Abhängigkeit von der Klemmenspannung U (zwischen den Klemmen K1 und K2) und dem Widerstand 14 ein mehr oder weniger großer Speisestrom $I_1$ in die Einrichtung 20 fließen. Liegt der Widerstandswert des Widerstandes 14 in der Größenordnung weniger Ohm, beispielsweise 5 Ohm, so wird die konstante Basisspannung am Transistor 12 über den Emitter des Transistors 12 und den niederohmigen Widerstand 14 auch die Klemmenspannung U auf etwa 0,25 V konstant halten, wenn der Speisestrom der Anschlußleitung um 50 mA sich ändert.

Sinkt jedoch infolge eines dem Speisestrom überlagerten Signalstromes die Klemmenspannung U unter die Spannung der Einrichtung 20, so haben Kollektor Ko1 und Emitter des Transistors 12 etwa gleiche Spannung, aber der Kollektor Ko2 ist nun negativ gegenüber dem Emitter des Transistors 12, so daß der Emitterstrom des Transistors 12 nunmehr über den Kollektor Ko2 in die Basis des Transistors 8 fließt und diesen aufsteuert.

Die angenommene konstante Basisspannung am Transistor 12 jedoch hat zur Folge, daß die Stromübernahme vom Kollektor Kol zum Kollektor Ko2 insbesondere durch die recht unterschiedlichen Stromverstärkungsfaktoren zwischen Emitter und den beiden Kollektoren ungleichförmig erfolgt, so daß die Spannung am Emitter des Transistors 12 und an den Klemmen der Teilnehmerstation in unzulässiger Weise verzerrt wird.

Um diese Verzerrungen wirkungsvoll zu unterdrücken, wird der Transistor 12 über einen Differenzverstärker D angesteuert. Der erste Eingang des Differenzverstärkers D ist über ein Impedanzglied 4,5, das im Prinzipschaltbild als Kondensator dargestellt ist, mit der einen Anschlußklemme K1 und über eine, einen vorgegebenen Innenwiderstand 7 aufweisende Konstantstromquelle 6 mit der anderen Anschlußklemme K2 verbunden. Der zweite Eingang des Differenzverstärkers ist - von evtl. zwischengeschalteten Dioden als Potentialwandler abgesehen - an dem Verbindungspunkt zwischen Emitterwiderstand 14 und Emitter des Transistors 12 angeschlossen.

Die hohe Verstärkung des Differenzverstärkers bewirkt, daß die Gleichspannung am Emitter des Transistors 12 praktisch gleich derjenigen der Konstantspannungsquelle 6 ist. Damit stabilisiert die Konstantspannungsquelle 6 auch die Spannung an den Anschlußklemme K1 und K2, bis auf den geringen Spannungsabfalls am Widerstand 14, der durch unterschiedlichen Speisestrom $I_1$ hervorgerufen wird.

Eine Signalspannung zwischen den Klemmen K1 und K2 gelangt direkt über den Kondensator 4,5 auf den ersten Eingang des Differenzverstärkers, der durch seine hohe Verstärkung die Transistoren 12 und 13 derart aussteuert, daß auch am Emitter des Widerstandes 12 bezüglich der Klemme K2 die gleiche Wechselspannung auftritt wie an der Klemme K1. Der Differenzverstärker bewirkt also, daß an dem Widerstand 14 im Arbeitsbereich der Schaltung keine Wechselspannung auftreten kann.

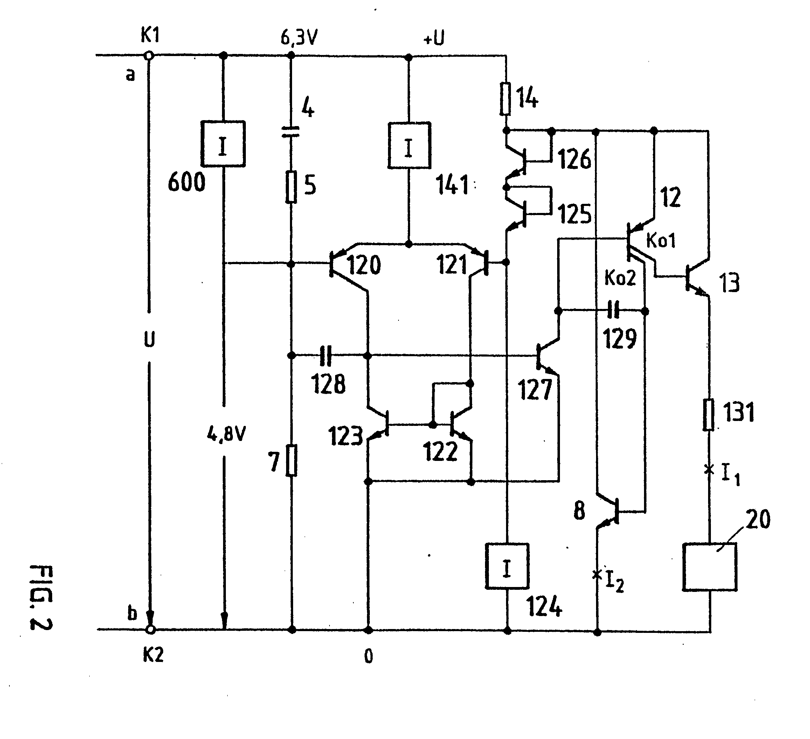

Ein weiteres Problem besteht nun darin, den Differenzverstärker so auszubilden, daß er noch mit sehr niedrigen Betriebsspannungen den Transistor 12 in gewünschter Weise aussteuern kann. Hierzu ist in FIG. 2 das ausführliche Schaltbild eines Ausführungsbeispiels dargestellt, welches eine Weiterbildung des in FIG. 1 gezeigten Prinzipschaltbildes ist. In vorteilhafter Weise wird der Differenzverstärker D mit vier Transistoren 120 bis 123 realisiert. Der Emitter des Transistors 120 ist, wie die Figur zeigt, mit dem Emitter des Transistors 121 verbunden und beide Emitter werden gemeinsam von einer Konstantstromquelle 141 gespeist.

Die Transistoren 122 und 123 bilden eine Stromspiegelschaltung. Bei dieser ist der Transistor 122 als Diode geschaltet, welche die Basis-Emitterstrecke des Transistors 123 steuert. Der Kollektorstrom des Transistors 121 bewirkt somit einen gleich großen Kollektorstrom für den Transistor 120 und da der Kollektorstrom des Transistors 120 in den Kollektor des Transistors 123 fließt, hat der Transistor 120 einen sehr hohen Außenwiderstand und seine Kollektorstromschwankungen bewirken eine sehr hohe Verstärkung.

Die Basiselektroden der Transistoren 120 und 121 sind die Eingänge des Differenzverstärkers. Die Basis des Transistors 120 ist der erste Eingang des Differenzverstärkers D von FIG. 1. Die in FIG. 1 mit 6 bezeichnete Konstantspannungsquelle wird hier durch einen konstanten, durch den Widerstand 7 fließenden Gleichstrom aus einer an die Anschlußklemme K1 angeschlossenen Konstantstromquelle 600 gebildet. Eine derartige Konstantspannungsquelle hat den Vorteil, daß sie sich leicht integrieren und über den Widerstandswert des Widerstandes 7 sich leicht die gewünschte Gleichspannung einstellen läßt.

Das in FIG. 1 als Kondensator dargestellte Impedanzglied 4,5 ist im Ausführungsbeispiel gemäß FIG. 2 durch die Reihenschaltung eines Kondensators 4 mit einem Widerstand 5 realisiert, wobei der Widerstand 5 dazu dient, die Wechselspannungsgegenkopplung zu verringern und damit den Wechselstromwiderstand zwischen den Klemmen Kl und K2 auf einen gewünschten Wert herabzusetzen. Der zweite Eingang des Differenzverstärkers ist im Ausführungsbeispiel aus Potentialgründen über zwei als Dioden geschaltete Transistoren 125 und 126 am Verbindungspunkt zwischen Widerstand 14 und Emitter des Transistors 12 geschaltet. Die Konstantstromquelle 124 zwischen Anschlußklemme K2 und zweitem Eingang des Differenzverstärkers hat die Aufgabe, die zur Potentialkorrektur dienenden Transistoren 125 und 126 mit einem Flußstrom zu versehen.

Um den Ausgang des Differenzverstärkers an das Potential der Basis des Transistors 12 anzupassen und um des weiteren dessen Verstärkung zu erhöhen, ist in vorteilhafter Weise zwischen dem Kollektor des Transistors 120 und der Basis des Transistors 12 ein weiterer Transistor 127 vom NPN-Typ geschaltet. Die Basis des Transistors ist mit dem Kollektor des Transistors 120 und damit mit dem Ausgang des Differenzverstärkers verbunden und der Emitter des Transistors 127 ist an der Anschlußklemme K1 angeschlossen.

Zur Vermeidung von Schwingungen im Übernahmegebiet des Stromes im Transistor 12 vom Kollektor Ko1 auf den Kollektor Ko2 und umgekehrt sind zwischen Kollektor und Basis der Transistoren 120 und 12 jeweils ein Kondensator 128 bzw. 129 geschaltet. Der Kondensator 129 ist zwischen der Basis und dem zweiten Kollektor Ko2 geschaltet. Des weiteren dient ein niederohmiger Widerstand 131 zur Verbesserung des Klirrfaktors in den Fällen, wo der Speisestrom $I_1$ bei hohen Signalspannungen und langer Anschlußleitung nur noch impulsmäßig in die Stromversorgungseinrichtung 20 fließt.

Durch den zwischengeschalteten Transistor 127 kann in vorteilhafter Weise der Differenzverstärker im Ausführungsbeispiel mit einem Strom der Konstantstromquelle 141 von 10 µA betrieben werden. Dadurch kann der Widerstandswert des Widerstandes 7 etwa 50 kOhm und der Strom der Konstantstromquelle 600 etwa 100 µA betragen. An der Basis des Transistors 120 liegen somit beim Ausführungsbeispiel etwa 4,8 V.

Die Stromversorgungseinrichtung 20 ist für eine Spannung von 5 V ausgelegt, so daß für den Widerstand $R_{131} = 5\,\Omega$ und den Widerstand $R_{14} = 5\,\Omega$ sich an den Klemmen K1, K2 bei einem mittleren Strom der Anschlußleitung von I = 40 mA eine Klemmenspannung K von etwa 6,3 V einstellt.

## Patentansprüche:

1. Schaltungsanordnung zum Speisen einer eine konstante Betriebsspannung liefernden Stromversorgungseinrichtung über eine den Speisegleichstrom bestimmende Einrichtung in Teilnehmerstationen von zentralgespeisten Fernmeldeanlagen, insbesondere Fernsprechvermittlungsanlagen, bei der die den Speisegleichstrom bestimmende Einrichtung als gegengekoppelte Verstärkerstufe (12, 13, 14) ausgebildet ist, bei der in Abhängigkeit von der Größe der Eingangsspannung (Spannung an K1, K2) wirksam werdende Schaltmittel (12) bei zum Speisen der Stromversorgungseinrichtung (20) ausreichender Größe der Eingangsspannung den Speisestromkreis ($I_1$: K1, 14, 13, 20, K2) durchschalten (13 durchlässig, 8 gesperrt), bei zum Speisen der Stromversorgungseinrichtung (20) nicht ausreichender Größe der Eingangsspannung den Speisestromkreis unterbrechen und einen die Stromversorgungseinrichtung (20) umgehenden Belastungsstromkreis ($I_2$: K1, 14, 8, K2) durchschalten (13 gesperrt), bei der die gegengekoppelte Verstärkerstufe aus einer komplementären Darlington-Schaltung (12, 13) besteht, deren emitterseitiger Transistor (12) eines ersten Leitfähigkeitstyps über einen Emitterwiderstand (14) an die eine Anschlußklemme (K1) der Anschlußleitung und deren kollektorseitiger Transistor (13) vom zweiten Leitfähigkeitstyp mit seinem Emitter mit der Stromversorgungseinrichtung (20) verbunden ist und bei der die Durchschaltung des Belastungsstromkreises mittels eines Transistors (8) vom zweiten Leitfähigkeitstyp erfolgt, dessen Kollektor am Verbindungspunkt zwischer Emitterwiderstand (14) und Emitter des emitterseitigen Transistors (12) der Darlington-Schaltung und dessen Emitter an der anderen Anschlußklemme (K2) angeschlossen ist,

dadurch gekennzeichnet,

daß als Schaltmittel der emitterseitige Transistor (12) der Darlington-Schaltung (12, 13) als Doppelkollektor-Transistor ausgebildet ist, dessen erster (normaler) Kollektor (Kol) mit der Basis des kollektorseitigen Transistors (13) und dessen zweiter (Hilfskollektor) Kollektor (Ko2) mit der Basis des im Belastungsstromkreis liegenden Transistors (8) vom zweiten Leitfähigkeitstyp verbunden ist, und daß die Basis des Doppelkollektor-Transistors (12) am Ausgang eines Differenzverstärkers (D) angeschlossen ist, dessen erster Eingang über ein Impedanzglied (4,5) mit der einen Anschlußklemme (K1) und über eine, einen vorgegebenen Innenwiderstand aufweisende Konstantspannungsquelle (6,7) mit der anderen Anschlußklemme (K2) und dessen zweiter Eingang mit dem Verbindungspunkt zwischen Emitterwiderstand (14) und Emitter des Doppelkollektor-Transistors (12) verbunden ist.

2. Schaltungsanordnung nach Anspruch 1, dadurch gekennzeichnet, daß der Differenzverstärker (D) vier Transistoren (120 bis 123) enthält, wobei der Emitter des ersten Transistors (120) mit dem Emitter des zweiten Transistors (121) verbunden ist und die miteinander verbundenen Emitter über eine Konstantstromquelle (141) mit der einen Anschlußklemme (K1) verbunden sind, der Kollektor des ersten Transistors (120) mit dem Kollektor eines dritten Transistors (123) verbunden ist, der Kollektor des zweiten Transistors (121) mit einem als Diode geschalteten Transistor (122) verbunden ist, die zusammengeschalteten Basis- und Kollektoranschlüsse des als Diode geschalteten Transistors (122) mit der Basis des dritten Transistors (123) verbunden sind, die Emitter der dritten und vierten Transistoren mit der anderen Anschlußklemme (K2) verbunden sind und die Basiselektrode des ersten Transistors (120) und des zweiten Transistors (121) die Eingänge des Differenzverstärkers sind.

3. Schaltungsanordnung nach Anspruch 1 oder 2, dadurch gekennzeichnet, daß die Konstantspannungsquelle (6,7) aus der Reihenschaltung einer Konstantstromquelle (600) und eines zwischen dem ersten Eingang des Differenzverstärkers (D) und der anderen Anschlußklemme (K2) geschalteten Widerstand (7) besteht.

4. Schaltungsanordnung nach einem der vorhergehenden Ansprüche, dadurch gekennzeichnet, daß zwischen Differenzverstärker (D) und Basis des Doppelkollektor-Transistors (12) ein weiterer Transistor (127) vom zweiten Leitfähigkeitstyp in Emitterschaltung geschaltet ist, dessen Basis am Ausgang des Differenzverstärkers (D) und dessen Emitter an der anderen Anschlußklemme (K2) angeschlossen ist.

5. Schaltungsanordnung nach einem der vorhergehenden Ansprüche, dadurch gekennzeichnet, daß zur Einstellung eines gewünschten niedrigeren Wechselstromwiderstandes zwischen den Anschlußklemmen (K1, K2) das Impedanzglied (4,5) aus der Reihenschaltung eines Kondensators (4) mit einem Widerstand (5) besteht.

**Claims**

1. Circuit arrangement for feeding a current supply equipment, wich delivers a constant operating voltage, by way of an equipment, wich determines the feed direct current, in subscriber stations of centrally fed signalling installations, particulary telephone exchange installations, in wich the equipment determining the feed direct current is constructed as amplifier stage (12, 13, 14) with negative feedback, in wich switching means (12), wich become effective in dependene on the magnitude of the input voltae (voltage at K1, K2), switch (13 conductive, 8 blocked) the feed curent circuit ($I_1$:K1, 14, 13, 20, K2) through when the magnitude of the input voltage is sufficient for feeding of the current supply equipment (20) and, when the magnitude of the input voltage is not sufficient for the feeding of the current supply equipment (20), interrupt the feed current circuit and switch through a loading current circuit ($I_1$:K1, 14, 8, K2) by-passing the current supply equipment (20), in wich the amplifier stage with negative feedback consist of complementary Darlington circuit (12, 13), of wich the emitter-end transistor (12) of a first conductivity type is connected by way of an emitter resistor (14) to the one connection terminal (K1) of the connecting line and of wich the collector-end transistor (13) of second conductivity type is connected by its emitter with the current supply equipment (20), and in wich the switching-through of the loading current circuit takes place by means of a transistor (8) of the second conductivity type, the collector of wich is connected to the junction between emitter resistor (14) and emitter of the emitter-end transistor (12) of the Darlington circuit and the emitter of wich is connected to the other connection terminal (K2), characterised thereby, that as switching means, the emitter-end transistor (12) of the Darlington circuit (12, 13) is constructed as double-collector transistor, the first (normal) collector (Ko1) of wich is connected with the base of the collector-end transistor (13) and the second (auxiliary collector) collector (Ko2) of wich is connected with the base of the transistor (8) of the second conductivity type lying in the loading current circuit, and that the base of the double-collector transistor (12) is connected to the output of a differential amplifier (D), the first input of which is connected by way of an impedance member (4, 5) with the one connection terminal (K1) and by way of a constant voltage source (6, 7) disp1ay-ing a predetermined internal resistance with the other connection terminal (K2) and the second input of which is connected to the junction between emitter resistor (14) and emitter of the doublecollector transistor (12).

2. Circuit arrangement according to claim 1, characterised thereby, that the differential amplifier (D) contains four transistors (120 to 123), wherein the emitter of the first transistor (120) is connected with the emitter of the second transistor (121) and the interconnected emitters are connected by way of a constant current source (141) with the one connection terminal (K1), the collector of the first transistor (120) is connected with the collector of a third transistor (123), the collector of the second transistor (121) is connected with a transistor (122) connected as diode, the interconnected base and collector connections of the transistor (122) connected as diode are connected with the base of the third transistor (123), the emitters of the third and fourth transistors are connected with the other connection terminal (K2) and the base electrodes of the first transistor (120) and of the second transistor (121) are the inputs of the differential amplifier.

3. Circuit arrangement according to claim 1 or 2, characterised thereby, that the constant voltage source (6, 7) consists of the series connection of a constant current source (600) and a resistor (7) connected between the first input of the differential amplifier (D) and the other connection terminal (K2).

4. Circuit arrangement according to one of the preceding claims, characterised thereby, that a further transistor (127) of second conductivity type, the base of which is connected to the output of the differential amplifier (D) and the emitter of which is connected to the other connection terminal (K2), is connected in grounded emitter configuration between the differential amplifier (D) and the base of the double-collector transistor (12).

5. Circuit arrangement according to one of the preceding claims, characterised thereby, that for the setting of a desired lower alternating current impedance between the connection terminals (K1, K2), the impedance member (4, 5) consists of the series connection of a capacitor (4) with a resistor (5).

**Revendications**

1. Circuit pour l'alimentation d'un dispositif délivrant une tension de service constante par l'intermédiaire d'un équipement déterminant le courant continu d'alimentation dans les postes d'abonné d'installations de télécommunication à batterie centrale, et en particulier de centraux téléphoniques, circuit dans lequel l'équipement déterminant le courant continu d'alimentation est réalisé sous forme d'un étage amplificateur à contre-réaction (12, 13, 14), dont les organes de commutation (12) activés en fonction de la valeur de la valeur de la tension d'entrée (tension entre KI et K2) connectent (13 conducteur, 8 bloqué), pour une valeur de la tension d'entrée suffisante pour l'alimentation du dispositif d'alimentation (20), le circuit d'alimentation ($I_1$ : KI, 14, 13, 20, K2) ou, pour une valeur de la tension d'entrée insuffisante pour l'alimentation du dispositif d'alimentation (20), interrompent le circuit d'alimentation et connectent (13 bloqué) un circuit de charge ($I_2$ : KI, 14, 8, K2) en dérivation avec le dispositif d'alimentation (20); l'étage amplificateur à contre-réaction est constitué par un darlington complémentaire (12, 13), dont le transistor émetteur (12) d'un premier type est relié par une résistance d'émetteur (14) à une borne de raccordement (KI) de la ligne d'abonné et dont le transistor collecteur (13) du second type est relié par son émetteur au dispositif d'alimentation (20); et la connexion du circuit de charge est assurée par un transistor (8) du second type, dont le collecteur est relié au point de connexion de la résistance d'émetteur (14) et de l'émetteur du transistor émetteur (12) du darlington et dont l'émetteur est reliée à la seconde borne de raccordement (K2), ledit circuit étant caractérisé en ce que les moyens de commutation sont constitués par le transistor émetteur (12) du darlington (12, 13) réalisé sous forme d'un transistor à double collecteur, dont le premier collecteur (normal) (Ko1) est relié à la base du transistor collecteur (13) et dont le second collecteur (auxiliaire) (Ko2) est relié à la base du transistor (8) du second type inséré dans le circuit de charge; et la base du transistor à double collecteur (12) est reliée à la sortie d'un amplificateur différentiel (D), dont la première entrée est reliée par une impédance (4, 5) à la borne de raccordement (K1) et par une source de tension constante (6, 7), présentant une résistance interne prédéterminée, à la seconde borne de raccordement (K2), et dont la seconde borne est reliée à l'émetteur du du transistor à double collecteur (12).

2. Circuit selon revendication 1, caractérisé en ce que l'amplificateur différentiel (D) comporte quatre transistors (120 à 123), l'émetteur du premier transistor (120) étant relié à l'émetteur du second transistor (121) et les émetteurs reliés étant connectés par une source de courant constant (141) à la borne de raccordement (K1); le collecteur du premier transistor (120) est relié au collecteur d'un troisieme transistor (123); le collecteur du second transistor (121) est relié à un transistor (122) branché en diode; les bornes réunies de base et de collecteur du transistor (122) branché en diode sont reliées à la base du troisieme transistor (123); les émetteurs du troisieme et du quatrieme transistor sont reliés à la seconde borne de raccordement (K2); et l'électrode de base du premier transistor (120) et du deuxieme (121) sont les entrées de l'amplificateur différentiel.

   3. Circuit selon une des revendications 1 ou 2, caractérisé en ce que la source de tension constante (6, 7) est constituée par le branchement en série d'une source de courant constant (600) et d'une résistance (7) branchée entre la première entrée de l'amplificateur différentiel (D) et la seconde borne de raccordement (K2).

   4. Circuit selon une quelconque des revendications 1 à 3, caractérisé en ce qu'entre l'amplificateur différentiel (D) et la base du transistor à double collecteur (12) est branché, en montage émetteur commun, un autre transistor (127) du second type, dont la base est reliée à la sortie de l'amplificateur différentiel D et dont l'émetteur est relié à la seconde borne de raccordement (K2).

   5. Circuit selon une quelconque des revendications 1 à 4, caractérisé en ce que l'impédance (4, 5) est constituée par le branchement en série d'un condensateur (4) et d'une résistance (5) pour l'ajustement de la faible impédance souhaitée entre les bornes de raccordement ($K_1$, $K_2$).

FIG. 1

FIG. 2